# EUROPÄISCHE PATENTSCHRIFT

(11) **EP 4 028 734 B1**
(45) Veröffentlichungstag und Bekanntmachung des Hinweises auf die Patenterteilung: **04.10.2023**
(21) Anmeldenummer: 20760824.1
(22) Anmeldetag: 20.08.2020
(51) Int. Cl.: G01K 1/143, G01K 13/02, G01K 15/00, G01F 1/684

(54) **NICHT INVASIVES THERMOMETER**
NONINVASIVE THERMOMETER
THERMOMÈTRE NON INVASIF

(30) Priorität: 12.09.2019 DE 102019124605
(43) Veröffentlichungstag der Anmeldung: 20.07.2022
(73) Patentinhaber: Endress+Hauser Wetzer GmbH+Co. KG, 87484 Nesselwang (DE)
(72) Erfinder: KOCH, Daniel, 87466 Oy-Mittelberg (DE); SCHALLES, Marc, 99097 Erfurt (DE); BRÜNDL, Harald, 85247 Schwabhausen (DE); WIEDEMANN, Stephan, 87544 Bihlerdorf (DE); WIEDEMANN, Peter, 87480 Weitnau (DE); ISELT, Torsten, 87435 Kempten (DE); PEUKER, Christian, 87484 Nesselwang (DE); VRDOLJAK, Pavo, 87484 Nesselwang (DE); WOLF, Georg, 87616 Marktoberdorf (DE); KALLWEIT, Christian, 87700 Memmingen (DE); MORNHINWEG, Markus, 86911 Dießen (DE); UMKEHRER, Alfred, 87659 Hopferau (DE)
(74) Vertreter: Koslowski, Christine Adelheid
(86) Internationale Anmeldenummer: PCT/EP2020/073389
(87) Internationale Veröffentlichungsnummer: WO 2021/047881

(56) Entgegenhaltungen:
- DE-A1-102009 003 848
- DE-A1-102014 118 206
- DE-A1-102015 112 425
- DE-A1-102017 100 267
- DE-U1-202006 003 903
- US-A1- 2014 334 517

## Beschreibung

Die Erfindung betrifft eine Vorrichtung zur Bestimmung und/oder Überwachung der Temperatur eines Mediums in einem Behältnis in der Automatisierungstechnik. Bei dem Behältnis handelt es sich beispielsweise um einen Behälter oder um eine Rohrleitung. Thermometer sind in unterschiedlichsten Ausgestaltungen aus dem Stand der Technik bekannt geworden. So gibt es Thermometer, welche zur Messung der Temperatur die Ausdehnung einer Flüssigkeit, eines Gases oder eines Festkörpers mit bekanntem Ausdehnungskoeffizienten heranziehen, oder auch solche, welche die elektrische Leitfähigkeit eines Materials oder eine davon abgeleitete Größe mit der Temperatur in Zusammenhang bringen, wie beispielsweise den elektrischen Widerstand bei Verwendung von Widerstandselementen oder den thermoelektrischen Effekt im Falle von Thermoelementen. Dagegen wird bei Strahlungsthermometern, insb. Pyrometern, zur Bestimmung der Temperatur einer Substanz deren Wärmestrahlung ausgenutzt. Die jeweils zugrundeliegenden Messprinzipien sind jeweils in einer Vielzahl von Veröffentlichungen beschrieben worden.

Bei einem Temperatursensor in Form eines Widerstandselements sind unter anderem sogenannte Dünnschicht- und Dickschicht-Sensoren sowie sogenannte Heißleiter (auch als NTC-Thermistoren bezeichnet) bekannt geworden. Bei einem Dünnschicht-Sensor, insbesondere einem Resistance Temperature Detector (RTD), kommt beispielsweise ein mit Anschlussdrähten versehenes und auf ein Trägersubstrat aufgebrachtes Sensorelement zum Einsatz, wobei die Rückseite des Trägersubstrats in der Regel metallisch beschichtet ist. Als Sensorelemente werden sogenannte Widerstandselemente, welche beispielsweise durch Platinelemente gegeben sind, verwendet, die unter anderem unter den Bezeichnungen PT10, PT100, und PT1000 auch kommerziell erhältlich sind.

Bei Temperatursensoren in Form von Thermoelementen wiederum wird die Temperatur durch eine Thermospannung bestimmt, die zwischen den einseitig angeschlossenen Thermodrähten aus unterschiedlichen Materialien entsteht. Zur Temperaturmessung werden üblicherweise Thermoelemente nach DIN-Norm IEC584, z.B. Thermoelemente vom Typ K, J, N, S, R, B, T oder E, als Temperaturfühler eingesetzt. Aber auch andere Materialpaare, insbesondere solche mit einem messbaren Seebeck-Effekt, sind möglich. Die Genauigkeit der Temperaturmessung hängt empfindlich von den jeweiligen thermischen Kontakten und der jeweils vorherrschenden Wärmeleitung ab. Die Wärmeströme zwischen dem Medium, dem Behältnis, in welchem sich das Mediums befindet, dem Thermometer und der Prozessumgebung spielen hier eine entscheidende Rolle. Für eine zuverlässige Temperaturbestimmung ist es wichtig, dass der jeweilige Temperatursensor und das Medium sich zumindest für eine bestimmte Zeit, welche zur Erfassung der Temperatur erforderlich ist, im Wesentlichen im thermischen Gleichgewicht befinden. Die Zeit für eine Reaktion eines Thermometers auf eine Temperaturänderung wird auch als Ansprechzeit des Thermometers bezeichnet.

Eine hohe Messgenauigkeit lässt sich insbesondere dann erzielen, wenn der Temperatursensor in das jeweilige Medium eintaucht. So sind zahlreiche Thermometer bekannt geworden, bei denen der Temperatursensor mehr oder weniger direkt mit dem jeweiligen Medium in Kontakt gebracht wird. Auf diese Weise lässt sich eine vergleichsweise gute Kopplung zwischen dem Medium und dem Temperatursensor erzielen.

Für verschiedene Prozesse und für viele Behältnisses, insbesondere kleine Behälter oder Rohrleitungen, ist jedoch eine nicht-invasive Bestimmung der Temperatur vorteilhafter. So sind ebenfalls Thermometer bekannt geworden, die von außen/innen an dem jeweiligen Behältnis, in dem sich das Medium befindet, befestigt werden können. Solche Geräte, auch Oberflächenthermometer oder Anlegefühler genannt, sind beispielsweise aus Dokumenten wie der DE102014118206A1 oder DE102015113237A1 bekannt geworden. Bei derartigen Messgeräten sind die Temperatursensoren nicht in direktem Kontakt mit dem jeweiligen Prozess. Dies erfordert, dass zur Sicherstellung einer guten thermischen Kopplung verschiedene zusätzliche Aspekte berücksichtigt werden müssen. So ist beispielsweise der mechanische und damit auch der thermische Kontakt zwischen Behälter und Thermometer entscheidend für die erreichbare Messgenauigkeit. Bei unzureichendem Kontakt ist eine genaue Temperaturbestimmung nicht möglich.

Als Oberflächen- oder Hautpunktthermometerwerden häufig Messeinsätze mit Temperatursensoren in Form von Thermoelementen verwendet, die direkt an die Außenfläche oder Haut des Rohres oder Behälters angeschweißt werden. In solchen Fällen kann der Austausch der Thermoelemente jedoch zu einem zeitaufwändigen und kostspieligen Prozess werden, insbesondere weil ein Austausch eine vorübergehende Abschaltung des Prozesses und/oder der Anwendung erfordern kann. Um diese Nachteile zu überwinden, sind beispielsweise aus der US5382093 oder der EP3633337 A1 jeweils Ausgestaltungen entsprechender Thermometer bekannt geworden, die einen einfachen Austausch der Temperatursensoren ermöglichen.

Darüber hinaus sind zahlreiche, unterschiedliche Ausgestaltungen von Thermometern zur nicht invasiven Temperaturmessung bekannt geworden, wie beispielsweise in den Dokumenten US2016/0047697A1, DE102005040699B3, EP3230704B1 oder EP2038625B1 beschrieben.

Die DE 10 2009 003848 A1 offenbart eine Temperaturkontrollvorrichtung, bei der mehrere Temperaturfühler beabstandet zueinander auf einem streifenförmigen Trägerband angeordnet sind.

Die DE 20 2006 003903 U1 beschreibt einen Sensor mit Trägermaterial, das als Befestigungsbinder des Sensors ausgebildet ist. Die Schnalle dient als das Trägerelement für wenigstens einen Sensor,

Die US 2014/334517 A1 beschreibt ein Thermometer zur nicht invasiven Temperaturmessung und offenbart hierfür eine Anordnung mit dem Temperatursensor und einem flexiblen, wärmeisolierenden Trägerelement, welches an einer Außenwandung eines Behältnisses anordenbar ist.

Eine zentrale Problematik bei der nicht invasiven Temperaturbestimmung stellt die Wärmeableitung vom Prozess an die Umgebung dar. Diese sorgt für einen deutlich höheren Messfehler als im Falle einer direkten Einbringung des jeweiligen Temperatursensors in den Prozess.

Daher liegt der Erfindung die Aufgabe zugrunde, ein Thermometer zur nicht-invasiven Temperaturmessung bereitzustellen, welches sich durch eine hohe Messgenauigkeit auszeichnet.

Diese Aufgabe wird gelöst durch die Vorrichtung zur Bestimmung und/oder Überwachung einer Prozessgröße, insbesondere der Temperatur oder des Durchflusses, eines Mediums in einem Behältnis, insbesondere einem Behälter, einem Container oder einer Rohrleitung, nach Anspruch 1. Die erfindungsgemäße Vorrichtung umfasst einen Temperatursensor zur Erfassung der Temperatur und ein flexibles, wärmeisolierendes Trägerelement, welches Trägerelement an einer Außenwandung des Behältnisses anordenbar ist, wobei der Temperatursensor auf dem Trägerelement befestigt ist.

Das Trägerelement ist insbesondere derart ausgestaltet, dass es an die Konturen des Behältnisses bzw. an die Konturen der Außenwandung des Behältnisses anpassbar ist. Das Trägerelement kann beispielsweise zumindest teilweise um die Wandung des Behältnisses herum angeordnet sein. Besonders bevorzugt ist eine Anordnung entlang einer Umfangslinie bezogen auf einer Querschnittsfläche senkrecht zur Längsachse des Behältnisses im Falle eines Behältnisses in Form einer Rohrleitung.

Der Temperatursensor ist vorzugsweise in einem dem Behältnis im daran angeordneten Zustand zugewandten Bereich des Trägerelements an dem Trägerelement befestigt. Die Vorrichtung wird von einem äußeren Bereich des Behältnisses mit dem Behältnis in thermischen Kontakt gebracht. Die Temperatur des Mediums wird demnach über eine Wandung des Behältnisses indirekt bestimmt. Mittels des wärmeisolierenden Trägerelements wird dabei eine Wärmeableitung an die Umgebung verringert bzw. verhindert. Dadurch herrscht in unmittelbarer Umgebung des Temperatursensor im Wesentlichen zumindest zeitweise ein thermisches Gleichgewicht mit dem Prozess. Der Temperatursensor ist also im Wesentlichen der Prozesstemperatur ausgesetzt ist, obwohl er sich außerhalb des Behältnisses befindet. Dies wiederum führt zu einer erhöhten Messgenauigkeit der Vorrichtung.

Die erfindungsgemäße Vorrichtung beinhaltet, dass auf dem Trägerelement zumindest teilweise eine Einheit umfassend zumindest teilweise ein Material mit anisotroper Wärmeleitfähigkeit angeordnet ist. In diesem Zusammenhang sei auf die deutsche Patentanmeldung mit dem Aktenzeichen DE102017100267 A1 verwiesen, auf welche im Rahmen der vorliegenden Erfindung vollumfänglich Bezug genommen wird.

Die erfindungsgemäße Einheit umfasst eine Schicht oder eine Beschichtung, welche Schicht oder Beschichtung zumindest teilweise aus dem Material mit anisotroper Wärmeleitfähigkeit besteht. Die Schicht weist bevorzugt in Längsrichtung, also entlang einer Ebene parallel zu der Schicht oder Beschichtung, eine größere Wärmeleitfähigkeit auf, als senkrecht dazu, bzw. senkrecht zu der Ebene. Hierdurch wird der Wärmestrom gezielt entlang der Einheit umverteilt.

Alternativ oder gleichzeitig umfasst die Einheit eine dünnwandige Folie, welche Folie zumindest teilweise aus dem Material mit anisotroper Wärmeleitfähigkeit besteht. Die Folie weist ebenfalls bevorzugt entlang ihrer Längsachse eine höhere Wärmeleitfähigkeit auf, als senkrecht dazu.

Bei der Einheit kann es sich beispielsweise um eine, insbesondere dünnwandige, Folie, beispielsweise aus Graphit handeln. Vorzugsweise ist die Folie auf einem dem Behältnis im daran befestigten Zustand zugewandten Bereich des Trägerelements angeordnet.

Gemäß der Erfindung ist der Temperatursensor und ggf. auch das Referenzelement und/oder Heizelement zwischen dem Trägerelement und der Einheit angeordnet ist. Die Einheit dient der gezielten Verteilung von Wärme aus dem Prozess entlang des dem Behältnis zugewandten Teilbereichs des Trägerelements. Somit wird gewährleistet, dass sämtliche am Trägerelement angeordneten Komponenten der Vorrichtung, insbesondere der zumindest eine Temperatursensor und ein ggf. vorhandenes Referenzelement stets im thermischen Gleichgewicht zueinander sind.

Die Vorrichtung kann optional weiterhin über eine Elektronik verfügen. Alternativ kann die Elektronik auch eine separate, mit der Vorrichtung verbindbare, Komponente sein. Dem Temperatursensor ist ferner vorteilhaft zumindest ein Anschlussdraht zur elektrischen Kontaktierung zugeordnet.

Eine Ausgestaltung beinhaltet, dass es sich bei dem Temperatursensor um ein Widerstandselement oder um ein Thermoelement handelt.

Die Vorrichtung kann weiterhin auch mehr als einen Temperatursensor umfassen, wobei alle verwendeten Temperatursensoren auf dem Trägerelement befestigt sind.

Eine weitere Ausgestaltung beinhaltet, dass die Vorrichtung zumindest ein Referenzelement zur in situ Kalibrierung und/oder Validierung zumindest des Temperatursensors umfasst, welches auf dem Trägerelement befestigt ist, und welches Referenzelement zumindest teilweise aus zumindest einem Material besteht, für welches Material im zur Kalibrierung des ersten Temperatursensors relevanten Temperaturbereich zumindest ein Phasenübergang bei zumindest einer vorgegebenen Phasenübergangstemperatur auftritt, für welchen Phasenübergang das Material in der festen Phase verbleibt. In dieser Hinsicht sei auf die EP02612122B1 verwiesen, auf welche im Rahmen der vorliegenden Patentanmeldung vollumfänglich Bezug genommen wird. Vorteilhaft verhindert das Trägerelement eine unerwünschte Wärmeableitung für den Temperatursensor und das Referenzelement unabhängig von der genauen Anordnung auf dem Trägerelement relativ zueinander. Bevorzugt sind der Temperatursensor und das Referenzelement stets im Wesentlichen im thermischen Gleichgewicht.

In einer Ausgestaltung umfasst die Vorrichtung ein Heizelement, welches auf dem Trägerelement befestigt ist. Mittels der Heizeinheit kann die Vorrichtung zudem auf eine vorgebbare Temperatur geheizt werden. Wieder sorgt das wärmeisolierende Trägerelement für eine Verringerung bzw. Verhinderung unerwünschter Wärmeableitung.

Darüber hinaus kann mittels des Heizelements eine Bestimmung des Durchflusses nach dem an sich aus dem Stand der Technik wohlbekannten Messprinzip der thermischen Durchflussmessung vorgenommen werden.

Demnach lässt sich der Durchfluss auf zwei unterschiedliche Arten bestimmen. Unter der Begriff Durchfluss fallen im Rahmen der vorliegenden Erfindung sowohl ein Volumendurchfluss als auch ein Massendurchfluss des Mediums. Ebenso kann eine Durchflussgeschwindigkeit oder Durchflussrate des Mediums ermittelt werden.

Gemäß dem ersten Messprinzip wird ein Sensorelement einem durch eine Rohrleitung strömenden Medium ausgesetzt und derart beheizt, dass seine Temperatur im Wesentlichen konstant bleibt. Bei bekannten, und zumindest zeitweise konstanten Mediumseigenschaften, wie der Mediumstemperatur, dessen Dichte oder auch Zusammensetzung, kann anhand der zum Halten der Temperatur auf den konstanten Wert notwendigen Heizleistung der Massedurchfluss des Mediums durch die Rohrleitung ermittelt werden. Unter der Mediumstemperatur sei dabei jene Temperatur verstanden, welche das Medium ohne einen zusätzlichen Wärmeeintrag eines Heizelements aufweist. Bei dem zweiten Messprinzip wird dagegen das Heizelement mit konstanter Heizleistung betrieben und die Temperatur des Mediums stromabwärts des Heizelements gemessen. In diesem Falle gibt die gemessene Temperatur des Mediums Aufschluss über den Massedurchfluss.

Das Heizelement kann beispielsweise in Form einer Widerstandsheizung ausgeführt sein.

Beispielsweise werden sogenannte Widerstandselemente, z. B. RTD-Widerstandselemente (Resistance Temperature Detector), insbesondere Platinelemente, eingesetzt, wie sie unter den Bezeichnungen PT10, PT100, und PT1000 auch kommerziell erhältlich sind. Die Widerstandselemente werden über die Umsetzung von ihnen zugeführter elektrischer Leistung, z. B. in Folge einer erhöhten Stromzufuhr, erwärmt.

In noch einer Ausgestaltung der Vorrichtung umfasst der Temperatursensor ein temperaturempfindliches Sensorelement, welches über zumindest eine erste und eine zweite Anschlussleitung elektrisch kontaktiert ist, wobei die erste Anschlussleitung in einen ersten und einen zweiten Abschnitt unterteilt ist, wobei der erste dem Sensorelement zugewandte Abschnitt aus einem ersten Material besteht, und wobei der zweite dem Sensorelement abgewandte Abschnitt aus einem zweiten sich von dem ersten unterscheidenden Material besteht, wobei die zweite Anschlussleitung aus dem zweiten Material besteht, und wobei der erste Abschnitt der ersten Anschlussleitung und zumindest ein Teil der zweiten Anschlussleitung einen ersten Differenz-Temperatursensor in Form eines Thermoelements bilden. In diesem Zusammenhang sei auf die bisher unveröffentlichte deutsche Patentanmeldung mit dem Aktenzeichen 102018116309.6 verwiesen, auf welche im Rahmen der vorliegenden Anmeldung vollumfänglich Bezug genommen wird. Mit einer derartigen Ausgestaltung des Temperatursensors ist es möglich, eine Wärmeableitung im Bereich des Temperatursensors erfassbar. Eine

genaue Kenntnis der Wärmeableitung erhöht weiter die Messgenauigkeit der Vorrichtung Im Falle der Bestimmung eines Durchflusses lassen sich mit abnehmender Wärmeableitung höhere Durchflussraten des Mediums in dem Behältnis detektieren, d.h. der Messbereich der Vorrichtung kann erweitert werden.

Bevorzugt sind der zumindest eine Temperatursensor sowie das ggf. ebenfalls vorhandene Referenzelement und/oder Heizelement, allesamt in einem dem Behältnis im daran angeordneten Zustand zugewandten Bereich des Trägerelements an dem Trägerelement befestigt. Dabei sind alle denkbaren, insbesondere geometrischen, Anordnungen der genannten Komponenten der Vorrichtung auf dem Trägerelement denkbar und fallen unter die vorliegende Erfindung.

In einer bevorzugten Ausgestaltung der Vorrichtung besteht das Trägerelement aus einem Kunststoff oder au einer Keramik. Bei dem Trägerelement handelt es sich dabei vorzugsweise um ein flächiges Gebilde mit vorgebbaren geometrischen Dimensionen. Eine weitere bevorzugte Ausgestaltung beinhaltet, dass zumindest eine Führung zum Führen zumindest einer Anschlussleitung zumindest des Temperatursensors und ggf. auch das Referenzelement und/oder Heizelement in das Trägerelement eingebracht ist. Bei der Führung kann es sich beispielsweise um eine Vertiefung, eine Rille, einen Kanal oder ein Loch in dem Trägerelement handeln. Auch können Hülsen in das Trägerelement eingebracht sein.

Die Führung dient der mechanischen Stabilisierung der Anschlussleitungen und verhindert ein unerwünschtes Abreißen. Die Anzahl der verwendeten Führungen hängt von der Anzahl der Anschlussleitungen und von der Anzahl der an dem Trägerelement befestigten Komponenten, beispielsweise weitere Temperatursensoren, ein Heizelement oder ein Referenzelement, ab.

In noch einer bevorzugten Ausgestaltung umfasst die Vorrichtung zumindest eine flexible Leiterplatte, welche zumindest teilweise als Anschlussleitung zumindest für den Temperatursensor und ggf. für das Heizelement und/oder das Referenzelement dient. Dadurch, dass zumindest teilweise, insbesondere in einem sich direkt an den Temperatursensor anschließenden Bereich eine flexible Leiterplatte als Anschlussleitung verwendet wird, kann die jeweilige Anschlussleitung abschnittsweise parallel zum Trägerelement und damit einhergehend parallel zur Wandung des Behältnisses geführt werden. Wie das Trägerelement passt sich die flexible Leiterplatte den Konturen des Behältnisses an. Eine derartige Führung der Anschlussleitungen parallel zur bzw. entlang der Wandung des Behältnisses reduziert weiter das Auftreten unerwünschter Wärmeableitung an die Prozessumgebung.

Eine besonders bevorzugte Ausgestaltung sieht vor, dass zumindest eine Ausformung zum Einbringen zumindest des Temperatursensors und ggf. des Referenzelements und/oder Heizelements in das Trägerelement eingebracht ist. Besonders bevorzugt ist die Ausformung derart ausgestaltet, dass der Temperatursensor Temperatursensors und ggf. das Referenzelement und/oder Heizelement im Wesentlichen frontbündig mit einer Oberfläche des Trägerelements abschließt/abschließen.

Der Temperatursensor und ggf. das Referenzelement und/oder Heizelement können beispielsweise mittels eines Klebers an dem Trägerelement, insbesondere in der jeweiligen Ausformung, befestigt werden. Eine Befestigung mittels eines Klebers ist aber im Rahmen der vorliegenden Erfindung keineswegs notwendig. Vielmehr können alle üblichen Befestigungsweisen zur Befestigung eines Temperatursensors und ggf. des Heizelements und/oder Referenzelements genutzt werden.

Eine weitere Ausgestaltung beinhaltet, dass die Vorrichtung Befestigungsmittel zur, insbesondere lösbaren, Befestigung der Vorrichtung an dem Behältnis umfasst. In dieser Hinsicht kommen alle dem Fachmann üblichen und geeigneten Befestigungsmittel, wie z.B. Rohrschellen, in Betracht und fallen unter die vorliegende Erfindung.

Dabei ist es von Vorteil, wenn die Befestigungsmittel dazu ausgestaltet sind, einen vorgebbaren Anpressdruck des Trägerelements an das Behältnis zu gewährleisten. Hierdurch lässt sich ein guter und reproduzierbarer thermischer Kontakt zwischen einer Wandung des Behältnisses und dem Trägerelement gewährleisten.

Bezüglich der Befestigungsmittel ist es von Vorteil, wenn die Befestigungsmittel zumindest einen Magneten, welcher an dem Trägerelement angeordnet ist, oder zumindest einen Bolzen mit einem Gewinde umfassen.

In noch einer Ausgestaltung umfasst die Vorrichtung ein Hüllelement, welches das Trägerelement zumindest teilweise auf einer dem Behältnis abgewandten Seite umgibt.

In dieser Hinsicht ist es von Vorteil, wenn das Hüllelement als Befestigungsmittel zur Befestigung der Vorrichtung an dem Behältnis dient, insbesondere wobei eine Geometrie des Hüllelements zumindest eine Rille oder zumindest ein Loch aufweist.

Anhand der nachfolgenden Figuren wird die Erfindung näher erläutert. Es zeigt:
Fig. 1: ein Thermometer zur nicht invasiven Temperaturmessung nach Stand der Technik Fig. 2: eine erste Ausgestaltung für ein erfindungsgemäßes Thermometer mit einem Temperatursensor;
Fig. 3: eine zweite Ausgestaltung für ein erfindungsgemäßes Thermometer mit zwei Temperatursensoren, einem Heizelement und einem Referenzelement;
Fig. 4: eine dritte Ausgestaltung für ein erfindungsgemäßes Thermometer mit einer Einheit umfassend ein Material mit anisotroper Wärmeleitfähigkeit und einem mit Ausformungen versehenen Trägerelement;
Fig. 5: eine vierte Ausgestaltung für ein erfindungsgemäßes Thermometer mit Führungen für Anschlussleitungen und Befestigungsmitteln; und
Fig. 6: eine fünfte Ausgestaltung eines erfindungsgemäßen Thermometers mit einem Hüllelement.

In den Figuren sind gleiche Elemente jeweils mit demselben Bezugszeichen versehen.

Die Ausgestaltungen aus den verschiedenen Figuren sind ferner beliebig miteinander kombinierbar.

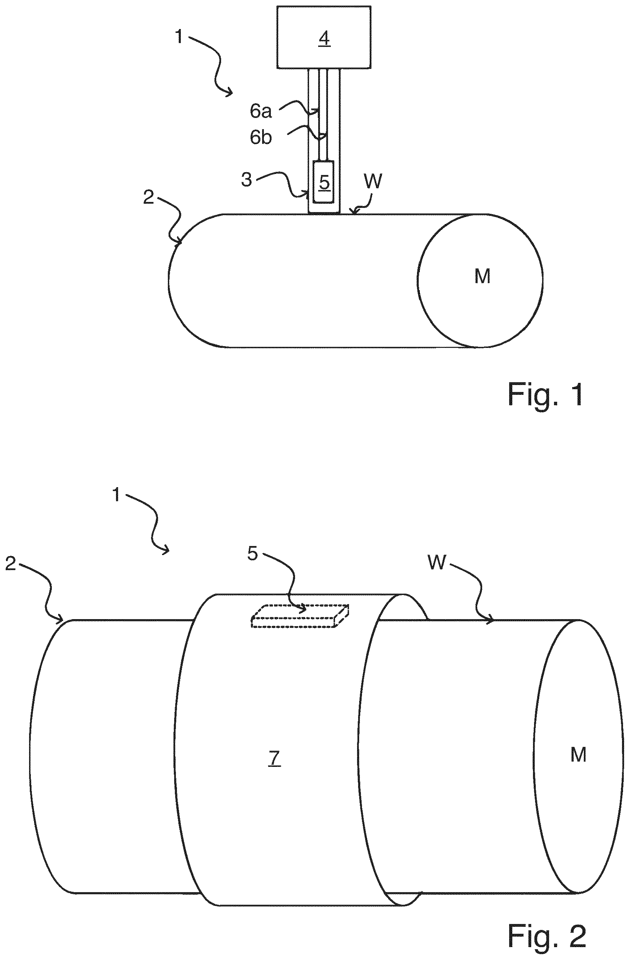

In Fig.1 ist eine schematische Abbildung eines Thermometers 1 gemäß Stand der Technik mit einem Messeinsatz 3 und einer Elektronik 4 gezeigt. Das Thermometer 1 dient der Erfassung der Temperatur T eines Mediums M, welches sich in einem Behältnis 2, hier in Form einer Rohrleitung, befindet. Zu diesem Zweck ragt das Thermometer 1 nicht in die Rohrleitung 2 hinein, sondern ist vielmehr zur nicht invasiven Temperaturbestimmung von außen auf eine Wandung W der Rohrleitung 2 aufgesetzt. Der Messeinsatz 3 umfasst einen Temperatursensor 5, welcher im vorliegenden Fall ein temperatursensitives Element in Form eines Widerstandselements umfasst. Der Temperatursensor 5 ist über die Anschlussleitungen 6a, 6b elektrisch kontaktiert und mit der Elektronik 4 verbunden. Während das gezeigte Thermometer 1 in kompakter Bauweise mit integrierter Elektronik 4 ausgeführt ist, kann bei anderen Thermometern 1 die Elektronik 4 auch separat von dem Messeinsatz 3 angeordnet sein. Auch muss es sich bei dem Temperatursensor 5 nicht notwendigerweise um ein Widerstandselement handeln und die Anzahl der verwendeten Anschlussleitungen 6 muss nicht notwendigerweise zwei betragen. Vielmehr kann die Anzahl der Anschlussleitungen 6 je nach angewendetem Messprinzip und verwendetem Temperatursensor 5 passend gewählt werden.

Wie bereits dargelegt, hängt die Messgenauigkeit eines solchen Thermometers 1 in hohem Maße von den jeweiligen für das Thermometer verwendeten Materialien und von den jeweiligen, insbesondere thermischen, Kontaktierungen, insbesondere im Bereich des Temperatursensors 5, ab. Der Temperatursensor 5 steht mittelbar, d.h. über den Messeinsatz 3 und über die Wandung W des Behältnisses 2, mit dem Medium M in thermischem Kontakt. Eine große Rolle spielt in diesem Zusammenhang auch eine Wärmeableitung vom Medium M an die Umgebung, welche für einen unerwünschten Temperaturgradienten im Bereich des Temperatursensors 5 führen kann.

Um diesen Problematiken geeignet zu begegnen, wird im Rahmen der vorliegenden Erfindung eine alternative Ausgestaltung für ein nicht invasives Thermometer 1 vorgeschlagen, wie in den folgenden Figuren anhand einiger bevorzugter, beispielhafter Ausgestaltungen gezeigt.

Eine erste Ausgestaltung eines erfindungsgemäßen Thermometers 1 ist in Fig. 2 gezeigt. Das Thermometer 1 umfasst ein flexibles wärmeisolierendes Trägerelement 7, welches Trägerelement 7 an einer Außenwandung W des Behältnisses 2 angeordnet ist. Für das hier gezeigte Beispiel mit einem Behältnis 2 in Form einer Rohrleitung ist das Trägerelement 7 senkrecht zur Längsachse der Rohrleitung 2 um die Außenwandung W der Rohrleitung 2 herum angeordnet. Das Trägerelement 7 ist also an die Konturen der Rohrleitung 2 angepasst. Es sei darauf verwiesen, dass eine erfindungsgemäße Vorrichtung 1 auch in Zusammenhang mit Behältern, Containern oder auch anderen Arten von Behältnissen verwendet werden kann. Das Trägerelement 7 ist dabei jeweils an der Außenwandung W des verwendeten Behältnisses 2 anbringbar und entsprechend an dessen Kontur in einem vorgebbaren Bereich angepasst.

An dem Trägerelement 7 ist der Temperatursensor 5 befestigt. Der Temperatursensor 5 ist in einem dem Prozess, und damit der Außenwandung W des Behältnisses 2 zugewandten Bereich des Trägerelements 7 an dem Trägerelement 7 befestigt. Im fortlaufenden Betrieb dient das Trägerelement 7 dazu, eine unerwünschte Wärmeableitung von dem jeweiligen Prozess, also von dem Medium M, an die Umgebung zu verringern bzw. zu verhindern. Dadurch, dass das Trägerelement 7 entlang seiner Oberfläche an der Wandung W des Behältnisses 7 angeordnet bzw. befestigt ist, kann über den gesamten dem Behältnis zugewandten Oberflächenbereich des Trägerelements eine gute Wärmeisolierung erzielt werden. Dadurch ist der Temperatursensor 5 im Wesentlichen im thermischen Gleichgewicht mit dem Medium M, was zu einer hohen Messgenauigkeit der jeweiligen Vorrichtung 1 führt.

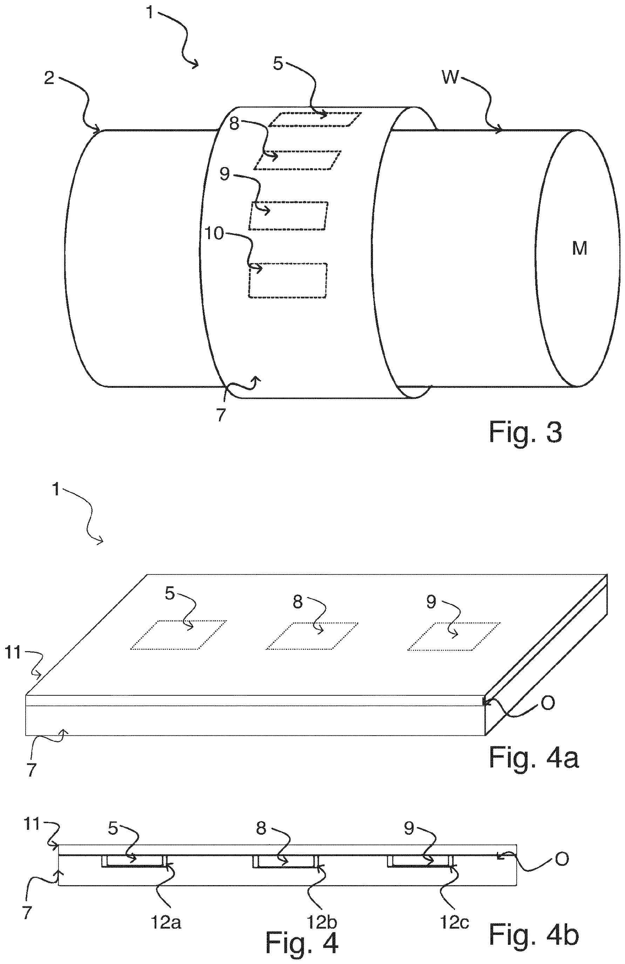

Neben dem Temperatursensor 5 kann die Vorrichtung 1 noch über weitere Komponenten verfügen, wie beispielhaft in Fig. 3 illustriert. Im Vergleich zur in Fig. 2 gezeigten

Ausgestaltung umfasst die Vorrichtung 1 hier zusätzlich ein Heizelement 8, ein Referenzelement 9 und einen weiteren Temperatursensor 10.

Bei der in Fig. 4 gezeigten Ausgestaltung verfügt das Thermometer 1 ferner über eine Einheit 11, welche zumindest teilweise ein Material mit anisotroper Wärmeleitfähigkeit umfasst. Diese ist auf einer dem Medium M bzw. dem Behältnis 2 zugewandten Seite des Trägerelements 7 auf dem Trägerelement 7 angeordnet. Diese dient der gleichmäßigen Wärmeverteilung entlang der dem Behältnis zugewandten Oberfläche O des Trägerelements 7. Für das hier gezeigte Beispiel sei angenommen, dass es sich bei der Einheit 11 um eine dünnwandige Graphitfolie handelt, welche auf dem Trägerelement 7 befestigt ist.

Der Temperatursensor 5, das Heizelement 8 und das Referenzelement 9 sind zwischen der Einheit 11 und dem Trägerelement 7 angeordnet. Wie in Fig. 4b ersichtlich verfügt das Trägerelement 7 über drei Ausformungen 12a-12c zum Einbringen des Temperatursensors 5, des Heizelements 8 und des Referenzelements 9 in das Trägerelement 7 derart, dass diese im Wesentlichen frontbündig mit der Oberfläche O abschließen.

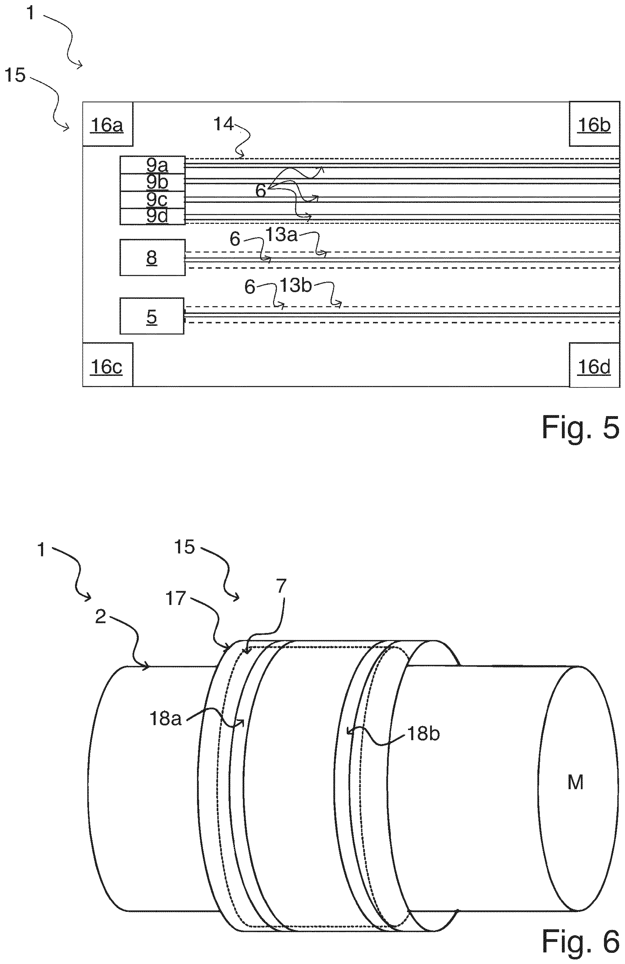

In der in Fig. 5 gezeigten Ausgestaltung verfügt die Vorrichtung 1 über vier nebeneinander angeordnete Referenzelemente 9a-9d, welche unterschiedliche Phasenübergangstemperaturen aufweisen, und welche über die flexible Leiterplatte 14 mit jeweils zwei Anschlussleitungen 6 elektrisch kontaktiert sind. Eine flexible Leiterplatte 14 kann aber auch zur Kontaktierung des Temperatursensors 5 und/oder des Heizelements 8 verwendet werden. Zur elektrischen Kontaktierung des Temperatursensors 5 und des Heizelements 8 sind ebenfalls jeweils zwei Anschlussleitungen 6 vorgesehen, welche durch die Führungen 13a, 13b geführt sind. Dabei kann es sich beispielsweise um Rillen, Ausformungen oder Kanäle handeln Zur Befestigung der Vorrichtung 1 an dem Behältnis 2 sind an dem Trägerelement 7 ferner vier Magnete 16a-16d angeordnet. Aber auch andere Befestigungsmethoden können verwendet werden und fallen ebenfalls unter die vorliegende Erfindung. Bei der Ausgestaltung gemäß Fig. 6 verfügt die Vorrichtung 1 beispielsweise ferner über ein Hüllelement 17, welches das Trägerelement 7 umgibt und zur Befestigung des Trägerelements 7 an dem Behältnis dient. Zu diesem Zwecke weist das Hüllelement für die hier gezeigte Ausgestaltung über zwei Rillen 18 auf, in welchen beispielsweise zur Befestigung an dem Behältnis 2 vorgesehene Schellen angeordnet werden können.

Alternativ kann eine Befestigung auch mittels Bolzen mit Gewinden erfolgen. Wird für einen solchen Fall ebenfalls ein Hüllelement verwendet, kann dieses beispielsweise mit zumindest einem Loch versehen sein.

### Bezugszeichenliste

- 1: Vorrichtung
- 2: Behältnis
- 3: Messeinsatz
- 4: Elektronik
- 5: Temperatursensor
- 6: Anschlussdrähte
- 7: Trägerelement
- 8: Heizelement
- 9: Referenzelement
- 10: Weiterer Temperatursensor
- 11: Einheit
- 12: Ausformungen
- 13: Führungen
- 14: Flexible Leiterplatte
- 15: Befestigungsmittel
- 16: Magnete
- 17: Hüllelement
- 18: Rillen
- M: Medium
- T: Temperatur
- W: Wandung des Behältnisses
- O: dem Behältnis zugewandte Oberfläche des Trägerelements

## Patentansprüche

1. Vorrichtung (1) zur Bestimmung und/oder Überwachung einer Prozessgröße, insbesondere der Temperatur (T) oder des Durchflusses, eines Mediums (M) in einem Behältnis (2) umfassend:
einen Temperatursensor (5) zur Erfassung der Temperatur (T), und
ein flexibles, wärmeisolierendes Trägerelement (7), welches Trägerelement (7) an einer Außenwandung (W) des Behältnisses (2) anordenbar ist, und wobei der Temperatursensor (5) auf dem Trägerelement (7) befestigt ist,
wobei auf dem Trägerelement (7) zumindest teilweise eine Einheit (11) umfassend zumindest teilweise ein Material mit anisotroper Wärmeleitfähigkeit angeordnet ist,
und wobei zumindest der Temperatursensor (5) zwischen dem Trägerelement (7) und der Einheit (11) angeordnet ist,
wobei die Einheit (11) eine Schicht oder eine Beschichtung umfasst, welche Schicht oder Beschichtung zumindest teilweise aus dem Material mit anisotroper Wärmeleitfähigkeit besteht und wobei die Schicht oder Beschichtung entlang einer Ebene parallel zu der Schicht oder Beschichtung, eine größere Wärmeleitfähigkeit aufweist als senkrecht zu der Ebene,
und/oder
wobei die Einheit eine dünnwandige Folie umfasst, welche Folie zumindest teilweise aus dem Material mit anisotroper Wärmeleitfähigkeit besteht und entlang ihrer Längsachse eine höhere Wärmeleitfähigkeit aufweist als senkrecht zu der Längsachse.

2. Vorrichtung (1) nach Anspruch 1,
wobei es sich bei dem Temperatursensor (5) um ein Widerstandselement oder um ein Thermoelement handelt.

3. Vorrichtung (1) nach Anspruch 1 oder 2,
umfassend zumindest ein Referenzelement (9) zur in situ Kalibrierung und/oder Validierung zumindest des Temperatursensors (5), welches auf dem Trägerelement (7) befestigt ist, und welches Referenzelement (9) zumindest teilweise aus zumindest einem Material besteht, für welches Material im zur Kalibrierung des ersten Temperatursensors (5) relevanten Temperaturbereich zumindest ein Phasenübergang bei zumindest einer vorgegebenen Phasenübergangstemperatur auftritt, für welchen Phasenübergang das Material in der festen Phase verbleibt.

4. Vorrichtung (1) nach zumindest einem der vorherigen Ansprüche, umfassend ein Heizelement (8), welches auf dem Trägerelement (7) befestigt ist

5. Vorrichtung (1) nach zumindest einem der vorherigen Ansprüche,
wobei der Temperatursensor (7) ein temperaturempfindliches Sensorelement, welches über zumindest eine erste (6a) und eine zweite Anschlussleitung (6b) elektrisch kontaktiert ist, umfasst,
wobei die erste Anschlussleitung in einen ersten und einen zweiten Abschnitt unterteilt ist,
wobei der erste dem Sensorelement zugewandte Abschnitt aus einem ersten Material besteht, und wobei der zweite dem Sensorelement abgewandte Abschnitt aus einem zweiten sich von dem ersten unterscheidenden Material besteht,
wobei die zweite Anschlussleitung aus dem zweiten Material besteht,
und wobei der erste Abschnitt der ersten Anschlussleitung und zumindest ein Teil der zweiten Anschlussleitung einen ersten Differenz-Temperatursensor in Form eines Thermoelements bilden.

6. Vorrichtung (1) nach zumindest einem der vorherigen Ansprüche,
wobei das Trägerelement (7) aus einem Kunststoff oder aus einer Keramik besteht.

7. Vorrichtung (1) nach zumindest einem der vorherigen Ansprüche,
wobei zumindest eine Führung (13) zum Führen zumindest einer Anschlussleitung (6) zumindest des Temperatursensors (5) in das Trägerelement (7) eingebracht ist.

8. Vorrichtung (1) nach zumindest einem der vorherigen Ansprüche,
umfassend zumindest eine flexible Leiterplatte (14), welche zumindest teilweise als Anschlussleitung (6) zumindest für den Temperatursensor (5) dient.

9. Vorrichtung (1) nach zumindest einem der vorherigen Ansprüche,
wobei zumindest eine Ausformung (12) zum Einbringen zumindest des Temperatursensors (5) in das Trägerelement (7) eingebracht ist.

10. Vorrichtung (1) nach zumindest einem der vorherigen Ansprüche,
umfassend Befestigungsmittel (15) zur, insbesondere lösbaren, Befestigung der Vorrichtung (1) an dem Behältnis (2).

11. Vorrichtung (1) nach Anspruch 10,
wobei die Befestigungsmittel (15) zumindest einen Magneten (16a-16d), welcher an dem Trägerelement (7) angeordnet ist, oder zumindest einen Bolzen mit einem Gewinde umfassen.

12. Vorrichtung (1) nach zumindest einem der vorherigen Ansprüche,
umfassend ein Hüllelement (17), welches das Trägerelement zumindest teilweise auf einer dem Behältnis (2) abgewandten Seite umgibt.

13. Vorrichtung (1) nach Anspruch 12,
wobei das Hüllelement (17) als Befestigungsmittel (15) zur Befestigung der Vorrichtung (1) an dem Behältnis (2) dient, insbesondere wobei eine Geometrie des Hüllelements (17) zumindest eine Rille (18) oder zumindest ein Loch aufweist.

## Claims

1. An apparatus (1) for determining and/or monitoring a process variable, in particular the temperature (T) or flow, of a medium (M) in a container (2) comprising:
a temperature sensor (5) for detecting the temperature (T), and
a flexible, heat-insulating carrier element (7), which carrier element (7) can be arranged on an outer wall (W) of the container (2), and wherein the temperature sensor (5) is fastened to the carrier element (7),
wherein a unit (11) at least partially comprising a material with anisotropic thermal conductivity is at least partially arranged on the carrier element (7),
and wherein at least the temperature sensor (5) is arranged between the carrier element (7) and the unit (11),
wherein the unit (11) comprises a layer or a coating, which layer or coating at least partially consists of the material with anisotropic thermal conductivity and wherein the layer or coating along a plane parallel to the layer or coating has a greater thermal conductivity than perpendicularly to the plane,
and/or
wherein the unit comprises a thin-walled film, which film at least partially consists of the material with anisotropic thermal conductivity and along its longitudinal axis has a higher thermal conductivity than perpendicularly to the longitudinal axis.

2. The apparatus (1) as claimed in claim 1,
wherein the temperature sensor (5) is a resistance element or a thermal element.

3. The apparatus (1) as claimed in claim 1 or 2,
comprising at least one reference element (9) for the in situ calibration and/or validation of at least the temperature sensor (5), which is fastened to the carrier element (7), and which reference element (9) at least partially consists of at least one material, for which material in the temperature range relevant for the calibration of the first temperature sensor (5) at least one phase transition occurs at at least one specified phase transition temperature, for which phase transition the material remains in the solid phase.

4. The apparatus (1) as claimed in at least one of the preceding claims, comprising a heating element (8) which is fastened to the carrier element (7).

5. The apparatus (1) as claimed in at least one of the preceding claims,
wherein the temperature sensor (7) comprises a temperature-sensitive sensor element which is electrically contacted via at least one first (6a) and one second connecting line (6b), wherein the first connecting line is subdivided into a first and a second section,
wherein the first section facing toward the sensor element consists of a first material, and wherein the second section facing away from the sensor element consists of a second material differing from the first,
wherein the second connecting line consists of the second material,
and wherein the first section of the first connecting line and at least a part of the second connecting line form a first temperature difference sensor in the form of a thermal element.

6. The apparatus (1) as claimed in at least one of the preceding claims,
wherein the carrier element (7) consists of a plastic or of a ceramic.

7. The apparatus (1) as claimed in at least one of the preceding claims,
wherein at least one guide (13) is introduced to guide at least one connecting line (6) at least of the temperature sensor (5) into the carrier element (7).

8. The apparatus (1) as claimed in at least one of the preceding claims,
comprising at least one flexible circuit board (14) which at least partially serves as a connecting line (6) at least for the temperature sensor (5).

9. The apparatus (1) as claimed in at least one of the preceding claims,
wherein at least one form (12) is introduced to introduce at least the temperature sensor (5) into the carrier element (7).

10. The apparatus (1) as claimed in at least one of the preceding claims,
comprising fastening means (15) for the, in particular releasable, fastening of the apparatus (1) to the container (2).

11. The apparatus (1) as claimed in claim 10,
wherein the fastening means (15) comprise at least one magnet (16a-16d) which is arranged on the carrier element (7), or at least one bolt with a thread.

12. The apparatus (1) as claimed in at least one of the preceding claims,
comprising a sheath element (17) which at least partially surrounds the carrier element on a side facing away from the container (2).

13. The apparatus (1) as claimed in claim 12,
wherein the sheath element (17) serves as a fastening means (15) for fastening the apparatus (1) to the container (2), in particular wherein a geometry of the sheath element (17) has at least one groove (18) or at least one hole.

## Revendications

1. Dispositif (1) destiné à la détermination et/ou à la surveillance d'une grandeur de process, notamment de la température (T) ou du débit d'un produit (M) se trouvant dans un réservoir (2), lequel dispositif comprend :
un capteur de température (5) destiné à mesurer la température (T), et
un élément de support (7) flexible et thermiquement isolant, lequel élément de support (7) peut être disposé sur une paroi extérieure (W) du réservoir (2), le capteur de température (5) étant fixé sur l'élément de support (7),
une unité (11) comprenant au moins partiellement un matériau, lequel présente une conductivité thermique anisotrope, étant disposée au moins partiellement sur l'élément de support (7),
et au moins le capteur de température (5) étant disposé entre l'élément de support (7) et l'unité (11),
l'unité (11) comprenant une couche ou un revêtement, laquelle couche ou lequel revêtement est constitué(e) au moins partiellement du matériau à conductivité thermique anisotrope et laquelle couche ou lequel revêtement présente une conductivité thermique plus élevée le long d'un plan parallèle à la couche ou au revêtement que perpendiculairement au plan,
et/ou
l'unité comprenant une feuille à paroi mince, laquelle feuille est constituée au moins partiellement du matériau à conductivité thermique anisotrope et présente une conductivité thermique plus élevée le long de son axe longitudinal que perpendiculairement à l'axe longitudinal.

2. Dispositif (1) selon la revendication 1,
pour lequel le capteur de température (5) est un élément résistif ou un thermocouple.

3. Dispositif (1) selon la revendication 1 ou 2,
lequel dispositif comprend au moins un élément de référence (9) destiné à l'étalonnage et/ou à la validation in situ d'au moins le capteur de température (5), lequel élément de référence est fixé sur l'élément de support (7), et lequel élément de référence (9) est constitué au moins en partie par au moins un matériau, matériau pour lequel, dans la gamme de température pertinente pour l'étalonnage du premier capteur de température (5), au moins une transition de phase se produit à au moins une température de transition de phase prédéterminée, transition de phase pour laquelle le matériau reste dans la phase solide.

4. Dispositif (1) selon au moins l'une des revendications précédentes,
lequel dispositif comprend un élément chauffant (8), lequel élément chauffant est fixé sur l'élément de support (7).

5. Dispositif (1) selon au moins l'une des revendications précédentes,
pour lequel le capteur de température (7) comprend un élément de détection sensible à la température, lequel est en contact électrique par l'intermédiaire d'au moins une première (6a) et une deuxième ligne de raccordement (6b),
la première ligne de raccordement étant divisée en une première et une deuxième section,
la première section tournée vers l'élément de détection étant constituée d'un premier matériau, et la deuxième section opposée à l'élément de détection étant constituée d'un deuxième matériau différent du premier,
la deuxième ligne de raccordement étant constituée du deuxième matériau, et la première section de la première ligne de raccordement et au moins une partie de la deuxième ligne de raccordement formant un premier capteur de température différentiel sous la forme d'un thermocouple.

6. Dispositif (1) selon au moins l'une des revendications précédentes,
pour lequel l'élément de support (7) est constitué d'une matière plastique ou d'une céramique.

7. Dispositif (1) selon au moins l'une des revendications précédentes,
pour lequel au moins un guide (13) destiné à guider au moins un câble de raccordement (6) d'au moins le capteur de température (5) est inséré dans l'élément de support (7).

8. Dispositif (1) selon au moins l'une des revendications précédentes,
lequel dispositif comprend au moins une carte de circuit imprimé flexible (14), laquelle sert au moins partiellement de ligne de raccordement (6) au moins pour le capteur de température (5).

9. Dispositif (1) selon au moins l'une des revendications précédentes,
pour lequel au moins un évidement (12) pour l'insertion d'au moins le capteur de température (5) est réalisé dans l'élément de support (7).

10. Dispositif (1) selon au moins l'une des revendications précédentes,
lequel comprend des moyens de fixation (15) pour fixer, notamment de manière amovible, le dispositif (1) sur le réservoir (2).

11. Dispositif (1) selon la revendication 10,
pour lequel les moyens de fixation (15) comprennent au moins un aimant (16a-16d), lequel est disposé sur l'élément de support (7), ou au moins un boulon avec un filetage.

12. Dispositif (1) selon au moins l'une des revendications précédentes,
lequel dispositif comprend un élément d'enveloppe (17), lequel élément entoure au moins partiellement l'élément de support sur une face opposée au réservoir (2).

13. Dispositif (1) selon la revendication 12,
pour lequel l'élément d'enveloppe (17) sert de moyen de fixation (15) pour fixer le dispositif (1) sur le réservoir (2), une géométrie de l'élément d'enveloppe (17) présentant notamment au moins une rainure (18) ou au moins un trou.
